# EUROPÄISCHE PATENTSCHRIFT

(11) **EP 2 612 277 B1**
(45) Veröffentlichungstag und Bekanntmachung des Hinweises auf die Patenterteilung: **22.04.2015**
(21) Anmeldenummer: 11751553.6
(22) Anmeldetag: 30.08.2011
(51) Int. Cl.: G06K 19/077

(54) **CHIPMODUL MIT KENNZEICHNUNG**
CHIP MODULE WITH IDENTIFICATION
MODULE À PUCE PRÉSENTANT UN MARQUAGE

(30) Priorität: 01.09.2010 DE 102010036057
(43) Veröffentlichungstag der Anmeldung: 10.07.2013
(73) Patentinhaber: Giesecke & Devrient GmbH, 81677 München (DE)
(72) Erfinder: GRIESMEIER, Robert, 83052 Bruckmühl OT Heufeldmühle (DE); TARANTINO, Thomas, 83410 Laufen (DE); OLBRICH, Magnus, 81543 München (DE)
(86) Internationale Anmeldenummer: PCT/EP2011/004365
(87) Internationale Veröffentlichungsnummer: WO 2012/028299

(56) Entgegenhaltungen:
- EP-A2- 1 492 047
- WO-A1-99/26197
- DE-A1-102007 054 385
- DE-C1- 19 626 702
- DE-T2- 69 327 216
- US-B1- 6 170 880

## Beschreibung

Die Erfindung betrifft ein Chipmodul für einen tragbaren Datenträger, insbesondere eine Chipkarte, sowie einen tragbaren Datenträger und ein Verfahren zur Herstellung eines Chipmoduls und eines tragbaren Datenträgers.

Tragbare Datenträger, wie kartenförmige Datenträger und insbesondere Chipkarten, werden in vielen Bereichen eingesetzt. Beispielsweise werden Chipkarten für den bargeldlosen Zahlungsverkehr verwendet oder dienen der Identifikation, beispielsweise in Form einer SIM-Karte im Mobilfunk oder allgemein als Nachweis einer Zugangsberechtigung oder als Ausweisdokument. Tragbare Datenträger weisen dazu einen integrierten Schaltkreis auf, wobei ein Daten- und/ oder Energietransfer mit einem externen Gerät über verschiedene Schnittstellen möglich ist. Sogenannte Dual-Interface-Karten weisen sowohl metallische Kontaktflächen für eine kontaktbehaftete Verbindung und eine Antennenspule, im Folgenden Antenne genannt, für eine kontaktlose Verbindung mit einem externen Gerät auf. Chipmodule mit diesen beiden Schnittstellen werden entsprechend Dual-Interface-Module genannt.

Bei der Herstellung eines tragbaren Datenträgers werden der integrierte Schaltkreis, die Antenne und die metallischen Kontaktflächen auf einem Chipmodul angeordnet, welches dann in eine Kavität eines Datenträgerkörpers eingebracht und dort beispielsweise verklebt wird. Der integrierte Schaltkreis und die mit dem integrierten Schaltkreis verbundene Antenne sind dabei auf einer ersten Seite eines Trägers angeordnet, wobei die Windungen der Antenne um den integrierten Schaltkreis herum, beispielsweise entlang des Randes des Trägers, geführt werden. Auf einer der ersten Seite gegenüberliegenden zweiten Seite des Trägers werden die metallischen Kontaktflächen angeordnet und mit dem integrierten Schaltkreis verbunden, entweder mittels sogenannter "Bumps" bei Flip-Chip-Modulen oder sogenannter Bonddrähte durch den Träger hindurch. Die metallischen Kontaktflächen können zum Beispiel mit Gold oder Palladium beschichtet werden. Üblicherweise liegt der Träger während der Herstellung in Form eines sogenannten Modulbandes vor, auf dem mehrere Chipmodule hergestellt werden und aus dem die fertigen Chipmodule dann ausgestanzt werden.

Bei Chipmodulen, auf denen auch die mit dem integrierten Schaltkreis verbundene Antenne angeordnet ist, wird die Antennenspule auch als "Coil on Module" bezeichnet. Im Gegensatz dazu kann die Antennenspule auch in dem Kartenkörper angeordnet und über entsprechende Verbindungsstellen mit dem integrierten Schaltkreis verbunden sein. Falls die Windungen der Antenne auf dem Chipmodul angeordnet sind, tritt das Problem auf, dass diese den metallischen Kontaktflächen gegenüberliegen, da die Kontaktflächen - bis auf schmale Schlitze zur galvanischen Trennung der einzelnen Kontaktflächen - die gesamte Oberfläche des Chipmoduls einnehmen. Dadurch wird die Funktionsfähigkeit der Antenne beeinträchtigt, da die metallischen Kontaktflächen abschirmend wirken. Zur Vermeidung dieses Effekts ist es bekannt, die metallischen Kontaktflächen derart zu verkleinern, dass die Windungen der Antenne vollständig oder zumindest überwiegend einem kontaktflächenfreien Bereich des Trägers gegenüberliegen. Die minimale Größe der Kontaktflächen und ihre relative Lage ist durch ISO 7816-2 festgelegt. In der WO 99/26197 A1 ist eine solche Chipkarte offenbart, bei der das implantierte Chipmodul reduzierte Kontaktflächen aufweist, um die Funktionsfähigkeit der auf dem Chipmodul angeordneten Antenne nicht zu beeinträchtigen. Dadurch liegt ein Teil der sichtbaren Seite des Trägersubstrats frei. Anspruch 1 ist gegenüber diesem Dokument abgegrenzt.

Aufgabe der vorliegenden Erfindung ist es, ein Chipmodul der vorgenannten Art bzw. einen damit ausgestatteten tragbaren Datenträger mit verbesserter Sicherheit hinsichtlich der Zuordnung des Chipmoduls bereitzustellen.

Die Aufgabe wird gelöst durch ein Chipmodul, einen tragbaren Datenträger sowie ein Verfahren zur Herstellung eines Chipmoduls und eines tragbaren Datenträgers gemäß den unabhängigen Ansprüchen. Weiterbildungen und vorteilhafte Ausgestaltungen sind in den davon abhängigen Ansprüchen angegeben.

Erfindungsgemäß ist in dem kontaktflächenfreien Bereich des Chipmoduls eine Kennzeichnung angeordnet. Durch die Nutzung der aufgrund der Reduzierung der Kontaktflächen freigewordenen Fläche auf dem Chipmodul zur Kennzeichnung lässt sich die Sicherheit bei der Zuordnung des Chipmoduls erhöhen. Die Kennzeichnung kann beispielsweise in einer Kennung eines Chipmodulherstellers und/ oder Kartenherstellers bestehen, so dass jedes Chipmodul zugeordnet und nachverfolgt werden kann. Auf diese Weise kann gegebenenfalls auch die Zuordnung eines Chipmoduls zu einem bestimmten tragbaren Datenträger, wie einer Chipkarte, bestimmt werden. Insbesondere wenn das erfindungsgemäße Chipmodul in einem Datenträgerkörper eines tragbaren Datenträgers implantiert ist, steht darüber hinaus eine vergrößerte Fläche auf dem Datenträger zur Kennzeichnung zur Verfügung, da auch der kontaktflächenfreie Bereich des Chipmoduls zur Kennzeichnung genutzt wird. Auf diese Weise kann vorteilhaft die Beziehung eines Chipmoduls zu einem bestimmten tragbaren Datenträger oder einer bestimmten Gruppe von tragbaren Datenträgern kenntlich gemacht werden.

Vorteilhaft umfasst die Kennzeichnung Schriftzeichen, Symbole, Codes oder Logos. Insbesondere kann die Kennzeichnung alphanumerische Zeichen, insbesondere Buchstaben und Ziffern, umfassen. Denkbar ist aber jeder beliebige Typ von Schriftzeichen, insbesondere auch Schriftzeichen beliebiger Alphabete oder auch Piktogramme. So kann beispielsweise ein Name eines Herstellers oder eine Seriennummer in dem kontaktflächenfreien Bereich des Chipmoduls dargestellt werden. Die Kennzeichnung kann auch einen oder mehrere maschinenlesbare Codes, wie insbesondere einen Barcode, umfassen. Der Code kann beispielsweise Informationen über das Chipmodul, wie Hersteller, Seriennummer oder dergleichen, codieren.

Die Kennzeichnung kann durch einen Aufdruck oder eine Laserbeschriftung erfolgen, wobei auch eine Kombination eines Aufdrucks und einer Laserbeschriftung denkbar ist. Im Falle eines Aufdrucks oder auch mehrerer Aufdrucke können unterschiedliche Drucktechniken zum Einsatz kommen, wie beispielsweise Siebdruck, Inkjet-Druck oder Tampon-Druck. Durch die Wahl eines geeigneten Druckverfahrens kann die Dicke des Aufdrucks, d.h. die Menge der aufgetragenen Farbe beeinflusst werden.

Die Kennzeichnung mittels eines Lasers ermöglicht eine besonders einfache Individualisierung der dargestellten Informationen, wie eines Logos, einer Typennummer oder einer Seriennummer. Es ist auch möglich, Sicherheitsmerkmale, welche in dem Träger bereits eingebracht worden sein können, mittels eines Lasers freizulegen oder zu aktivieren. Beispielsweise können in dem Träger vorhandene Pigmente freigelegt werden. Es ist des Weiteren möglich, vor der Bearbeitung mit dem Laser beispielsweise einen Lack mit oder ohne solche Pigmente auf den kontaktflächenfreien Bereich aufzubringen, welcher dann mittels des Lasers partiell aktiviert oder auch nur geschwärzt wird. Die Laserbeschriftung wie auch das Aufbringen oben beschriebener Aufdrucke können in beliebigen Stadien des Herstellungsverfahrens des Chipmoduls bzw. des tragbaren Datenträgers erfolgen, insbesondere auf dem Modulband, dem bereits ausgestanzten Chipmodul oder dem tragbaren Datenträger, in welchem das Chipmodul bereits implantiert ist.

In einer vorteilhaften Ausgestaltung wird der kontaktflächenfreie Bereich auf der zweiten Seite des Chipmoduls vollständig oder teilweise mit einer Spritzgussmasse überspritzt. Der integrierte Schaltkreis auf der gegenüberliegenden ersten Seite des Trägers wird ebenfalls mit einer Spritzgussmasse überspritzt. Dadurch wird das empfindliche Bauteil wie auch eventuell vorhandene Bonddrähte auf der ersten Seite des Trägers gegen mechanische Einwirkungen geschützt. Der kontaktflächenfreie Bereich und der integrierte Schaltkreis können dabei insbesondere mit dergleichen Spritzgussmasse überspritzt werden. Dabei können beide Bereiche in einem Schritt, insbesondere gleichzeitig, überspritzt werden. Dies kann beispielsweise durch eine Spritzgussform realisiert werden, welche aus mehreren Teilen besteht, wobei zumindest ein Teil auf der ersten Seite des Trägers und zumindest ein weiterer Teil auf der zweiten Seite des Trägers angeordnet wird. Insbesondere kann der Spritzguss für mehrere Chipmodule gleichzeitig erfolgen, bevor diese aus dem Modulband herausgetrennt werden.

Der kontaktflächenfreie Bereich kann auch mit einer UV-härtenden Masse beschichtet werden. Die Masse wird im flüssigen bzw. zähflüssigen Zustand auf den kontaktflächenfreien Bereich des Chipmoduls aufgetragen und mittels ultraviolettem Licht ausgehärtet. Das Auftragen und Aushärten kann auch auf dem Modulband erfolgen. Die Masse kann dabei auf der ganzen Fläche des kontaktflächenfreien Bereichs oder auch nur teilweise aufgetragen werden. Möglich ist auch der Einsatz einer thermisch aushärtenden Masse. Die auszuhärtende Masse kann mittels unterschiedlicher bekannter Verfahren auf den Träger des Chipmoduls aufgetragen werden.

Es kann auch eine Beschichtung auf den kontaktflächenfreien Bereich aufgeklebt werden. Insbesondere können dabei Aufkleber verwendet werden, welche die gleiche Form aufweisen wie der kontaktflächenfreie Bereich. Auch eine nur teilweise Beklebung ist möglich. Die aufzuklebende Beschichtung kann auf einem separaten Band dem Herstellungsprozess zugeführt werden, von diesem abgenommen und dann auf das Chipmodul appliziert werden. Es kann so beispielsweise eine Kennzeichnung bereits auf dem Aufkleber vorhanden sein, welche dann auf das Chipmodul aufgeklebt wird. Die aufgeklebte Beschichtung kann aber auch erst nach dem Aufkleben bedruckt werden.

Eine Beschichtung des kontaktflächenfreien Bereichs des Chipmoduls kann auch mittels fotolithografischer Techniken erfolgen. Bei üblichen fotolithografischen Verfahren wird ein lichtempfindlicher Fotolack auf eine metallische Beschichtung des Trägers aufgetragen und durch eine Maske hindurch belichtet, welche die gewünschte zu erzeugende Struktur repräsentiert. Die metallische Schicht kann zum Beispiel nach Aufbringen einer Starterschicht aus Kupfer in einem mehrstufigen Galvanikprozess erzeugt werden. Beispielsweise ist der Träger beidseitig mit einer mehrschichtigen Metallisierung versehen. Nach dem Belichten wird nicht belichteter und somit nicht ausgehärteter Lack von der metallischen Schicht entfernt. Zur Erzeugung beispielsweise der ISO-Kontaktflächen und sonstiger Leitungen wird die unter dem Lack angeordnete Metallisierung, welche nach dem Entfernen des nicht ausgehärteten Lacks stellenweise frei liegt, geätzt.

In Anlehnung daran kann nach der Herstellung der metallischen Kontaktflächen in einem weiteren Schritt eine fotolithografische Beschichtung auf den kontaktflächenfreien Bereich aufgebracht werden. Dabei wird ein lichtempfindlicher Fotolack vollflächig oder teilweise auf den kontaktflächenfreien

Bereich aufgetragen. Die Belichtung kann durch eine Maske hindurch erfolgen, welche insbesondere die metallischen Kontaktflächen abdeckt, um zu verhindern, dass ein eventuell auf die Kontaktflächen aufgetragener Lack aushärtet. Die Maske kann aber auch Stellen innerhalb des kontaktflächenfreien Bereichs abdecken, falls eine bestimmte Struktur, beispielsweise die Kennzeichnung, erzeugt werden soll. Nicht belichteter Lack wird abschließend entfernt.

In einer weiteren Ausgestaltung kann der kontaktflächenfreie Bereich Erhebungen aufweisen, die durch Hochprägung von der ersten Seite aus gebildet sind. Die Hochprägungen können dabei mittels bekannten Verfahren erzeugt werden, wobei der Träger mittels eines Stempels und einer Matrize kaltverformt wird. Insbesondere kann anschließend oder gleichzeitig auf die hochgeprägten Erhebungen mittels eines Farbtransferbandes eine Farbe aufgebracht werden. Um die Funktionsfähigkeit des tragbaren Datenträgers nicht zu beeinträchtigen darf die Höhe der Erhebungen nicht größer sein als die Dicke der metallischen Kontaktflächen.

Die Umrisse der Kennzeichnung können zumindest teilweise oder vollständig durch die oben beschriebenen Beschichtungen, d.h. die Spritzgussmasse, die UV-härtende Masse, die Beklebung oder die fotolithografische Beschichtung, oder durch die hochgeprägten Erhebungen gebildet sein. Dies kann alternativ oder zusätzlich zu dem Aufdruck und der Laserbeschriftung erfolgen.

In einer bevorzugten Ausgestaltung der Erfindung erstrecken sich die Beschichtung bzw. die Erhebungen vollständig oder zumindest überwiegend über den kontaktflächenfreien Bereich. Dadurch kann die zur Kennzeichnung nutzbare Fläche maximiert werden. Die Dicke der Beschichtung bzw. der Erhebungen wird dabei so gewählt, dass die freie Oberfläche der Beschichtung bzw. der Erhebungen bündig oder innerhalb des vorgegebenen Toleranzbereiches darunter, aber nicht darüber mit der freien Oberfläche der Kontaktflächen ist. Die aufgrund der reduzierten Ausdehnung der Kontaktflächen entstandene Stufe kann so ausgeglichen werden. Insbesondere ist die im Wesentlichen ganze Oberfläche eines tragbaren Datenträgers, in dessen Kavität ein solches Chipmodul eingesetzt ist, bündig und weist keine Vertiefungen auf.

Die passende Dicke der Beschichtung wird dabei abhängig von der Art der Beschichtung durch die Wahl einer entsprechenden Spritzgussform, das Auftragen der auszuhärtenden Masse oder fotolithografischen Beschichtung, durch die Wahl eines passenden Aufklebers oder durch das Druckverfahren, insbesondere das Siebdruckverfahren, bestimmt. Die Höhe der hochgeprägten Erhebungen wird durch die Wahl des Werkzeugs bestimmt.

Eine bündige Oberfläche des Chipmoduls erweist sich auch beim Implantieren des Chipmoduls in eine Kavität eines Datenträgerkörpers, insbesondere mittels Heißkleber, als vorteilhaft. Das Chipmodul wird bei diesem Verfahren mittels eines Heizstempels in die Kavität gedrückt, wobei mittels der Wärme des Stempels der Heißkleber aktiviert wird. Wenn das Chipmodul eine bündige Oberfläche aufweist, hat der Stempel vollflächigen Kontakt zu dem Chipmodul. Dadurch wird zum einen die Kraftübertragung und zum anderen die Wärmeleitung verbessert. Die Implantation des Chipmoduls kann dadurch insgesamt verbessert werden.

Um die Sende- und Empfangsfunktion der Antenne nicht zu beeinträchtigen, besteht die Beschichtung vorteilhaft aus einem nichtmetallischen Material. Insbesondere werden beim Drucken elektrisch nicht leitende Farben verwendet. Beispielsweise eignen sich Kunststoffe als Beschichtung. Die hochgeprägten Erhebungen bestehen per se aus einem nichtmetallischen Material, da der Träger aus einem nichtmetallischen Material besteht.

Zum Schutz des kontaktflächenfreien Bereichs und insbesondere der Kennzeichnung kann im kontaktflächenfreien Bereich eine Schutzschicht, insbesondere ein Schutzlack, aufgebracht werden. Es versteht sich, dass die freie Oberfläche der Schutzschicht nicht über die Oberfläche der Kontaktflächen hinausragen darf, d.h. die Dicke der unter der Schutzschicht liegenden Schichten, wie die beschriebenen Beschichtungen, die hochgeprägten Erhebungen und auch die Aufdrucke, muss kleiner sein als die Dicke der Kontaktflächen, wenn eine Schutzschicht aufgetragen werden soll. Bevorzugt ist die Summe der einzelnen Schichtdicken gleich der Schichtdicke der ISO-Kontakte, so dass die Oberfläche der Schutzschicht mit der Oberfläche der Kontaktflächen bündig ist.

In dem kontaktflächenfreien Bereich des Chipmoduls kann darüber hinaus ein Sicherheitsmerkmal angeordnet sein, wobei es sich bevorzugt um ein optisch variables Sicherheitsmerkmal handelt. Sicherheitsmerkmale werden zur Fälschungssicherung von Wertgegenständen eingesetzt und gestatten eine Überprüfung der Echtheit des Wertgegenstands. Übliche Wertgegenstände sind Banknoten, Aktien, Ausweise, Urkunden, Gutscheine, Schecks oder auch tragbare Datenträger, wie Chipkarten oder Kreditkarten. Optisch variable Sicherheitsmerkmale vermitteln einem Betrachter unter verschiedenen Betrachtungswinkeln verschiedene optische Eindrücke und sind damit mit Kopiergeräten nicht reproduzierbar. Optisch variable Sicherheitsmerkmale können beispielsweise optisch variable Tinten, aber auch Dünnschichtelemente, Hologramme oder fluoreszierende Merkmale sein. Das Sicherheitsmerkmal im kontaktflächenfreien Bereich des Chipmoduls kann dabei die Kennzeichnung selbst oder einen Hintergrund der Kennzeichnung bilden. Das Sicherheitsmerkmal kann unter einer Schicht verborgen sein und durch einen Laser freigelegt und damit sichtbar bzw. aktiv werden.

In einer bevorzugten Ausgestaltung des tragbaren Datenträgers mit einem Chipmodul stehen die Kennzeichnung im kontaktflächenfreien Bereich des Chipmoduls und eine Kennzeichnung auf dem Datenträgerkörper miteinander in Beziehung. Auf diese Weise kann die Sicherheit bei der Zuordnung eines Chipmoduls zu einem bestimmten Datenträger verbessert werden. Vorteilhaft gehen die Kennzeichnung auf dem Chipmodul und die Kennzeichnung auf dem Datenträgerkörper ineinander über. Insbesondere wird somit die eine Kennzeichnung durch die andere fortgesetzt, wobei die Kennzeichnungen direkt aneinander angrenzen können. Beispielsweise wird ein Motiv auf dem Datenträgerkörper auf dem kontaktflächenfreien Bereich des Chipmoduls fortgesetzt. Wird das fertige Chipmodul in die Kavität des tragbaren Datenträgers eingesetzt, ist ein falsch eingesetztes Chipmodul sofort visuell erkennbar. Es ist aber auch möglich, den tragbaren Datenträger erst nach dem Einbringen des Chipmoduls in die Kavität zu bedrucken, d.h. die Oberfläche des Datenträgerkörpers wird gleichzeitig mit dem kontaktflächenfreien Bereich des Chipmoduls bedruckt. Dabei ist es besonders vorteilhaft, wenn die freie Oberfläche des kontaktflächenfreien Bereichs, insbesondere die einer Beschichtung oder Erhebung, bündig mit der Oberfläche des Datenträgerkörpers ist.

In einer weiteren Ausgestaltung wird der kontaktflächenfreie Bereich des Chipmoduls nach dem Einbringen des Chipmoduls in eine Kavität eines tragbaren Datenträgers von einer Deckschicht des Datenträgerkörpers überdeckt. Dabei ist die Deckschicht so gewählt, dass die Oberfläche der Deckschicht mit der Oberfläche der Kontaktflächen bündig ist. Die Deckschicht kann beispielsweise nach dem Implantieren des Chipmoduls in die Kavität des Datenträgerkörpers in einem weiteren Laminierschritt aufgebracht werden. Auf diese Weise kann auch der Halt des Chipmoduls in der Kavität verbessert werden.

Beim Aufbringen einer Beschichtung auf den kontaktflächenfreien Bereich kann es erforderlich sein, die Kontaktflächen selbst zu schützen. Insbesondere, wenn eine Farbe oder ein Lack aufgetragen, beispielsweise aufgesprüht, wird, kann es notwendig sein, die metallischen Kontaktflächen während des Aufbringens der Beschichtung zu bedecken, um ihre spätere Funktionsfähigkeit bei der kontaktbehafteten Kommunikation nicht zu beeinträchtigen. Es kann dazu vor dem Aufbringen der Beschichtung eine Schutzschicht auf die Kontaktflächen aufgetragen werden, welche nach dem Aufbringen der Beschichtung wieder entfernt wird, so dass die metallischen Kontaktflächen dann wieder frei liegen. Es kann aber auch eine Maske verwendet werden, welche die metallischen Kontaktflächen während des Aufbringens der Beschichtung schützt. Allerdings kann gegebenenfalls auch auf eine Schutzschicht verzichtet werden. Falls das Aufbringen der Beschichtung beispielsweise durch Aufsprühen mittels sehr feiner Düsen erfolgt, kann auf eine Schutzschicht verzichtet werden.

Bevorzugt handelt es sich bei dem tragbaren Datenträger um eine Chipkarte in einem der Formate ID-1 oder ID-000 gemäß ISO 7816 oder auch im Mini-UICC-Format. Das Chipmodul ist dabei gemäß ISO 7816-2 angeordnet, wobei die Kontaktflächen in jedem Falle normgerecht dimensioniert und angeordnet sind.

Es versteht sich, dass die Betrachtung der Ausgestaltungen des Chipmoduls auch jeweils einen tragbaren Datenträger, insbesondere eine Chipkarte, umfasst, in welchem das entsprechende Chipmodul implantiert ist. Neben der Bedeutung der Kennzeichnung eines Chipmoduls allein, kann auch die Kennzeichnung eines Chipmoduls im Zusammenhang mit einem tragbaren Datenträger von Bedeutung sein, insbesondere für den Fall, dass der Datenträger selbst eine Kennzeichnung trägt, wie oben ausgeführt.

Die Erfindung wird im Folgenden beispielhaft anhand der begleitenden Zeichnungen beschrieben. Darin zeigen:
Fig. 1 ein Chipmodul mit einer Kennzeichnung,
Fig. 2 eine Chipkarte mit einem implantierten Chipmodul mit Kennzeichnung,
Fig. 3 bis 10 verschiedene Ausführungsbeispiele eines Chipmoduls mit Kennzeichnung im Schnitt,
Fig. 11 ein erstes Ausführungsbeispiel eines tragbaren Datenträgers mit einem implantierten Chipmodul im Schnitt,
Fig. 12 in zweites Ausführungsbeispiel eines tragbaren Datenträgers mit einem implantierten Chipmodul im Schnitt,
Fig. 13a bis 13c schematisch Verfahrensschritte zur Herstellung des in Fig. 5 dargestellten Chipmoduls,
Fig. 14a und 14b schematisch Verfahrensschritte zur Herstellung des in Fig. 6 dargestellten Chipmoduls,
Fig. 15 einen Verfahrensschritt zur Herstellung eines Chipmoduls mit einer aufgesprühten Beschichtung,
Fig. 16 das Implantieren eines Chipmoduls in eine Kavität eines Datenträgerkörpers mittels eines Heizstempels,
Fig. 17 ein Chipmodul mit vollflächigen Kontaktflächen aus dem Stand der Technik,
Fig. 18 eine Chipkarte mit dem in Fig. 17 dargestellten Chipmodul aus dem Stand der Technik,
Fig. 19 ein Chipmodul mit verkleinerten Kontaktflächen aus dem Stand der Technik,
Fig. 20 die Rückseite des in Fig. 19 dargestellten Chipmoduls aus dem Stand der Technik,
Fig. 21 eine Chipkarte mit dem in Fig. 19 dargestellten Chipmodul aus dem Stand der Technik,
Fig. 22 das in Fig. 19 dargestellte Chipmodul aus dem Stand der Technik im Schnitt, und
Fig. 23 die in Fig. 21 dargestellte Chipkarte aus dem Stand der Technik im Schnitt.

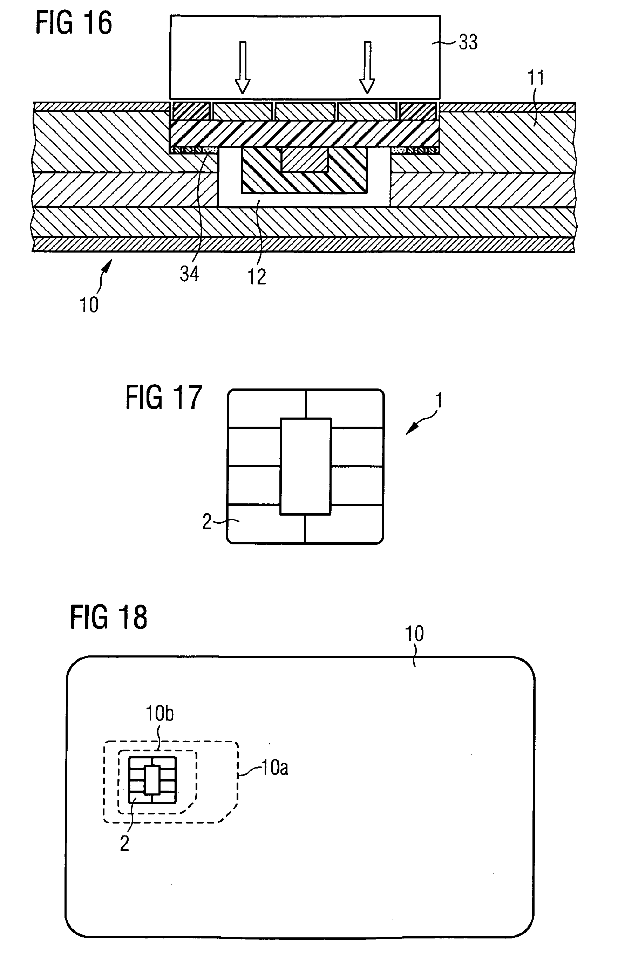

In Fig. 17 bis 23 sind bekannte Chipmodule bzw. Chipkarten aus dem Stand der Technik dargestellt. Fig. 17 zeigt die Oberseite eines herkömmlichen Chipmoduls 1, das acht Kontaktflächen 2 aufweist. Alternativ sind auch sechs Kontaktflächen 2 möglich. Die Kontaktflächen 2 nehmen die ganze Oberfläche des Chipmoduls 1 ein, bis auf schmale Schlitze zur galvanischen Trennung der einzelnen Kontaktflächen 2. Fig. 18 zeigt einen entsprechenden tragbaren Datenträger in Form einer Chipkarte 10 im ID-1 Format, in der das Chipmodul 1 aus Fig. 17 implantiert ist. Fig. 18 zeigt strichliniert weitere tragbare Datenträger im ID-000 Format 10a und im Mini-UICC Format 10b.

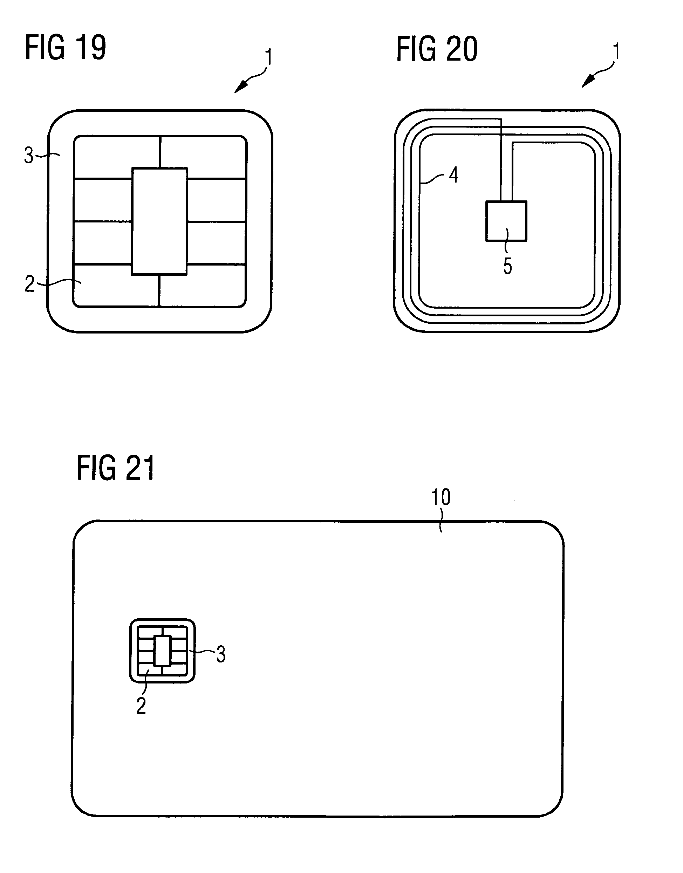

In Fig. 19 ist ein weiteres Chipmodul 1 dargestellt, welches reduzierte Kontaktflächen 2 und einen kontaktflächenfreien Bereich 3 aufweist. Bei dem in Fig. 19 dargestellten Chipmodul 1 handelt es sich um ein Coil-on-Module-Modul, das auch als Dual-Interface-Modul bezeichnet wird, d.h. es weist sowohl Kontaktflächen 2 für einen kontaktbehafteten Daten- und/ oder Energietransfer zwischen einem externen Gerät und einem integrierten Schaltkreis 5 als auch eine Antenne 4 für einen kontaktlosen Daten- und/ oder Energietransfer zwischen einem externen Gerät und dem integrierten Schaltkreis 5 auf. Die in Fig. 20 schematisch dargestellte Rückseite des Chipmoduls 1 aus Fig. 19 zeigt die Antenne 4, welche entlang des Randes des Chipmoduls 1 um den integrierten Schaltkreis 5 herum geführt ist. Aus den Fig. 19 und 20 ist ersichtlich, dass die Windungen der Antenne 4 auf der Rückseite des Chipmoduls 1 dem kontaktflächenfreien Bereich 3 auf der Vorderseite des Chipmoduls 1 gegenüberliegen. Auf diese Weise wird die Funktionsfähigkeit der Antenne 4 nicht bzw. nur gering von den metallischen Kontaktflächen 2 beeinträchtigt. In Fig. 21 ist eine Chipkarte 10 mit dem in den Fig. 19 und 20 dargestellten Chipmodul gezeigt.

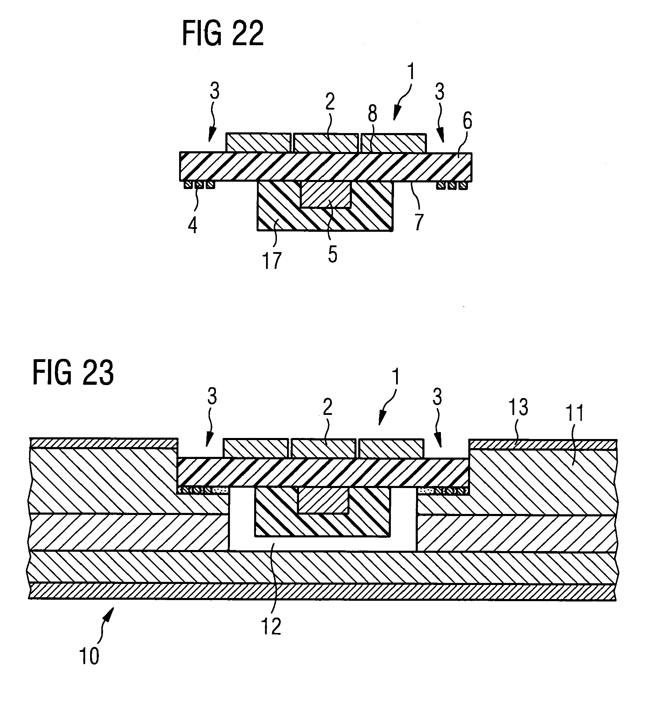

In den Fig. 22 und 23 ist ein Schnitt durch das Chipmodul 1 aus Fig. 19 und 20 bzw. durch die Chipkarte 10 aus Fig. 21 dargestellt. Auf der Unterseite 7 des Trägers 6 sind die Windungen der Antenne 4 sowie der Chip 5 angeordnet. Der Chip 5 ist in eine Vergussmasse 17 eingebettet, welcher auch eventuell vorhandene (nicht dargestellte) Bonddrähte umgibt. Auf der Oberseite 8 des Trägers 6 sind die Kontaktflächen 2 und der kontaktflächenfreie Bereich 3 angeordnet. Das Chipmodul 1 wird, wie in Fig. 23 dargestellt, in eine Kavität 12 eines Datenträgerkörpers 11 eingebracht und dort zum Beispiel mittels Kleber fixiert. Die Oberfläche der Kontakte 2 ist bündig mit der Oberfläche 13 des Datenträgerkörpers.

In Fig. 19 und 20 bis 23 ist zu erkennen, dass der kontaktflächenfreie Bereich 3 frei liegt. Es ist eine Stufe zu der Oberfläche der Kontaktflächen 2 bzw. zu der Oberfläche 13 des Datenträgers vorhanden.

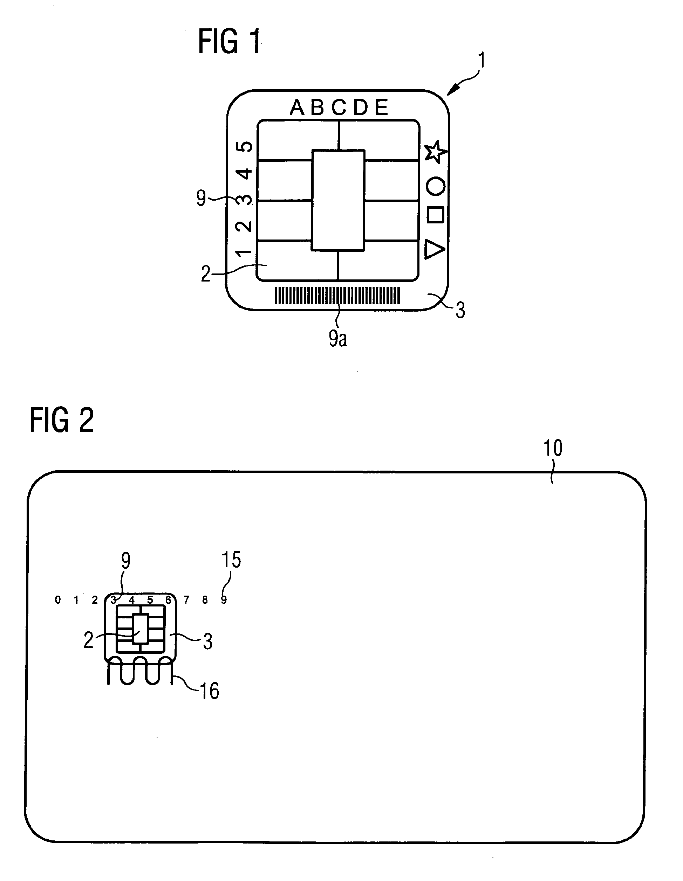

In Fig. 1 ist nun ein erfindungsgemäßes Chipmodul 1 dargestellt. In dem kontaktflächenfreien Bereich 3, welcher um die verkleinerten Kontaktflächen 2 am Rande des Chipmoduls 1 verläuft, ist eine Kennzeichnung 9 angebracht. Der kontaktflächenfreie Bereich 3 liegt den Windungen einer Antenne 4 gegenüber, welche, wie in Fig. 20 dargestellt, um den integrierten Schaltkreis 5 herum verlaufen. Die Rückseite des Chipmoduls 1 aus Fig. 1 entspricht der aus Fig. 20.

Die Kennzeichnung 9 kann aus beliebigen Schriftzeichen, Symbolen, Codes oder Logos bestehen. Fig. 1 zeigt eine Kennzeichnung 9, welche aus alphanumerischen Zeichen und Symbolen besteht. Insbesondere kann die Kennzeichnung 9 in einer individualisierbaren Information bestehen, beispielsweise einer Seriennummer oder dem Namen eines Herstellers. Ferner weist der kontaktflächenfreie Bereich 3 einen Barcode 9a auf.

Fig. 2 zeigt einen tragbaren Datenträger in Form einer Chipkarte 10, in der ein Chipmodul 1 mit einer Kennzeichnung 9 implantiert ist. Die Kennzeichnung 9 liegt in diesem Fall in Form von Ziffern vor. Auf der Chipkarte 10 ist ebenfalls eine Kennzeichnung 15 aufgebracht, welche mit der Kennzeichnung 9 auf dem kontaktflächenfreien Bereich 3 des Chipmoduls 1 in Beziehung steht. In diesem Ausführungsbeispiel wird eine Ziffernfolge 15 auf der Chipkarte 1 durch eine Ziffernfolge 9 auf dem Chipmodul 1 in logischer Weise fortgesetzt oder einfach ergänzt. Dadurch kann beispielsweise eine eindeutige Zuordnung des Chipmoduls 1 zu der Chipkarte 1 erfolgen. Darüber hinaus weist die Chipkarte 10 eine Kennzeichnung 16 auf, welche sich auf dem kontaktflächenfreien Bereich 3 des Chipmoduls 1 fortsetzt. Dies ermöglicht ebenfalls eine einfache Erkennung eines falschen Chipmoduls. Die Kennzeichnung 16 kann beispielsweise auch als optisch variables Sicherheitsmerkmal oder als ein personalisiertes Bild einer Person ausgebildet sein. Unabhängig von der Art der Kennzeichnung wird durch die Nutzung des kontaktflächenfreien Bereichs 3 die Kennzeichnungsfläche der Chipkarte 10 vergrößert. Gleichzeitig werden durch die reduzierte Größe der metallischen Kontaktflächen 2 gute kontaktlose Eigenschaften der Chipkarte 10 erreicht.

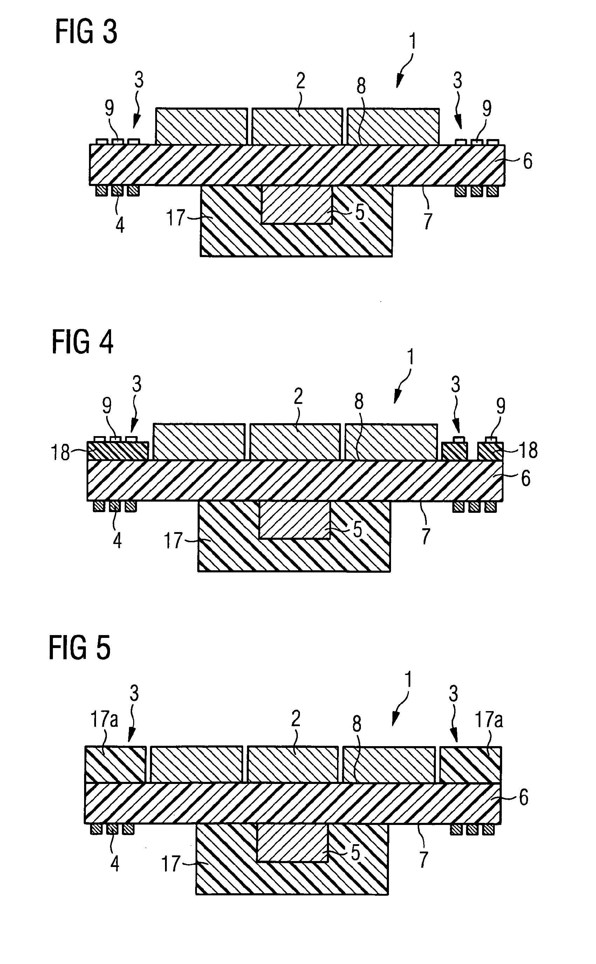

Ein erstes Ausführungsbeispiel eines Chipmoduls 1 ist schematisch in Fig. 3 dargestellt. Die Schnittdarstellung zeigt den Träger 6, auf dessen Unterseite 7 die Antenne 4 und der von der Vergussmasse 17 umschlossene integrierte Schaltkreis 5 angeordnet sind. Auf der Oberseite 8 sind die ISO-Kontaktflächen 2 sowie der kontaktflächenfreie Bereich 3 angeordnet. Die Kennzeichnung 9 wird durch einen einfachen Aufdruck und/oder eine Laserbeschriftung gebildet.

In dem in Fig. 4 dargestellten Ausführungsbeispiel ist in dem kontaktflächenfreien Bereich 3 eine Beschichtung 18 aufgebracht, welche eine geringere Dicke als die Kontaktflächen 2 aufweist. Die Beschichtung 18 ist in diesem Ausführungsbeispiel nur teilweise aufgebracht, wobei die Umrisse der Kennzeichnung auch durch die Beschichtung 18 gebildet sein können. Es ist ferner ein Aufdruck und/ oder eine Laserbeschriftung vorhanden, welche alternativ oder zusätzlich die Umrisse der Kennzeichnung 9 bildet. Die Beschichtung 18 kann unterschiedlich ausgeführt sein, wie im Folgenden mit Bezug auf die Fig. 5 bis 9 näher erläutert wird.

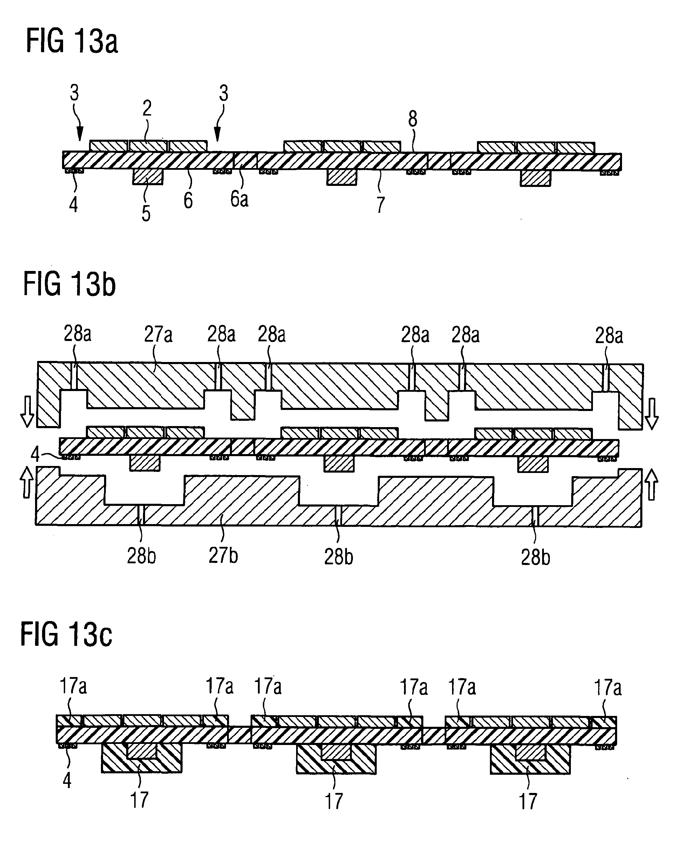

Fig. 5 zeigt ein Ausführungsbeispiel eines Chipmoduls 1, bei dem der kontaktflächenfreie Bereich 3 mit einer Spritzgussmasse 17a überdeckt ist. Es handelt sich bevorzugt um die gleiche Spritzgussmasse, die auch als Vergussmasse 17 den Chip 5 umgibt. Das Herstellungsverfahren wird nachfolgend mit Bezug auf die Fig. 13a bis 13c näher erläutert. Die Spritzgussmasse 17a ist in diesem Ausführungsbeispiel vollflächig auf den kontaktflächenfreien Bereich 3 aufgetragen und weist die gleiche Dicke wie die Kontaktflächen 2 auf, so dass eine bündige Gesamtoberfläche des Chipmoduls 1 entsteht.

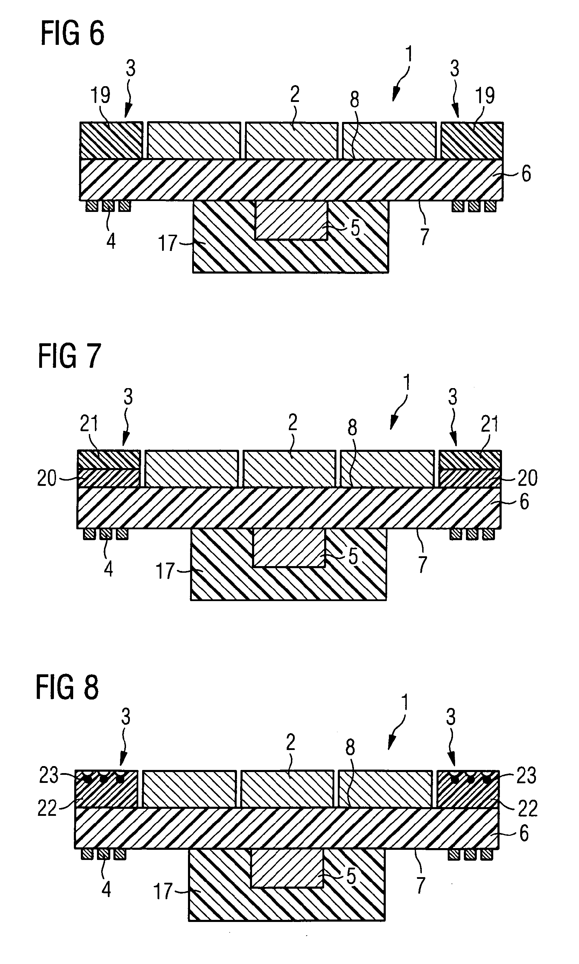

Das in Fig. 6 dargestellte Ausführungsbeispiel eines Chipmoduls 1 weist ebenfalls eine bündige Oberfläche auf. Hier ist auf den kontaktflächenfreien Bereich 3 eine Beschichtung 19 aufgebracht, bei der es sich beispielsweise um eine unter ultraviolettem Licht aushärtende Masse handeln kann, welche auch nach dem Aushärten noch bedruckt werden kann. Es kann sich bei der Beschichtung 19 aber auch um eine aufgetragene Farbe oder einen Lack handeln. Die Farbe oder der Lack kann beispielsweise aufgesprüht oder in beliebigen Drucktechniken aufgebracht werden. Zum Beispiel kann mittels Siebdruck eine ausreichend dicke Farbschicht aufgetragen werden, so dass die Oberfläche des Aufdrucks bündig mit der Oberfläche der Kontaktflächen 2 ist. Die Beschichtung 19 kann alternativ aber auch in einem Aufkleber bestehen. Eine weitere Möglichkeit ist eine Beschichtung aus einem lichtempfindlichen Fotolack, welcher in Anlehnung an fotolithografische Techniken auf den kontaktflächenfreien Bereich 3 aufgetragen wird.

Fig. 7 zeigt ein weiteres Ausführungsbeispiel eines Chipmoduls 1. Eine Beschichtung 20 ist auf den kontaktflächenfreien Bereich 3 aufgetragen und weist eine geringere Dicke auf als die Kontaktflächen 2. Die Beschichtung kann wie die Beschichtung 19 des Chipmoduls 1 aus Fig. 6 unterschiedlich ausgeführt sein. Insofern wird auf die obigen Ausführungen verwiesen. Auf der Beschichtung 20 ist eine Schutzschicht 21 angeordnet, beispielsweise ein Schutzlack, wobei die Oberfläche der Schutzschicht 21 bündig mit der Oberfläche der Kontaktflächen 2 ist.

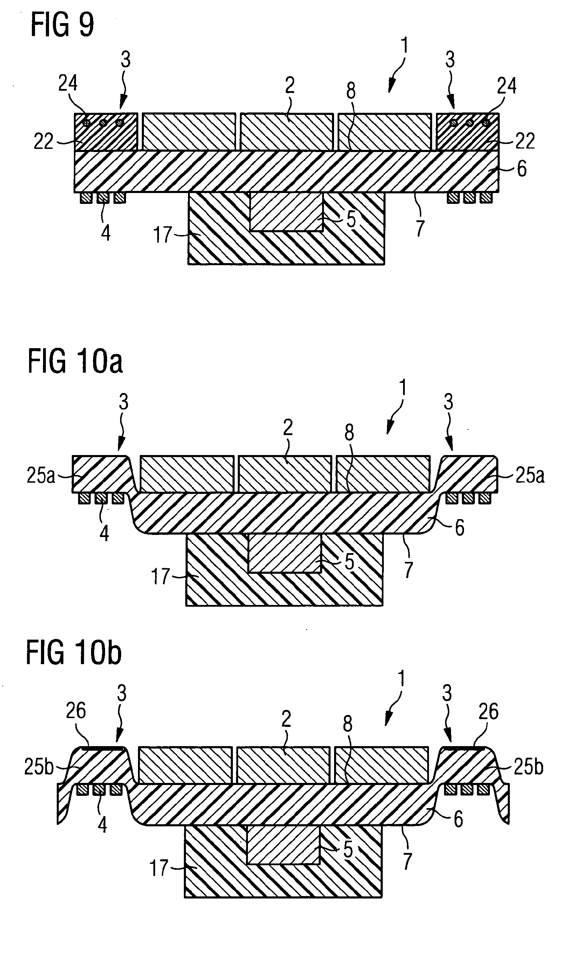

In den Fig. 8 und 9 sind Ausführungsbeispiele von Chipmodulen 1 dargestellt, bei welchen der kontaktflächenfreie Bereich 3 zunächst mit einer Lackschicht 22 beschichtet und dann mit Laser bearbeitet wurde. Die Lackschicht 22 kann beispielsweise transparent sein. Es ist auch möglich, zuerst einen Aufdruck auf den kontaktflächenfreien Bereich 3 aufzutragen und dann einen Schutzlack 21 aufzutragen, welcher anschließend mit Laser bearbeitet wird. Daher kann auch insbesondere ein Chipmodul gemäß Fig. 7 mit den im Folgenden beschriebenen Laserbeschriftungen versehen werden.

In Fig. 8 weist die Schicht 22 Pigmente 23 auf, welche mittels Laser freigelegt wurden. Bei den Pigmenten 23 kann es sich um beliebige Farbstoffe handeln, zum Beispiel fluoreszierende Stoffe, welche ein Sicherheitsmerkmal darstellen. In dem in Fig. 9 dargestellten Ausführungsbeispiel weist die Schicht 22 Stellen 24 auf, welche innerhalb der Schicht 22 mittels Laser aktiviert, d.h. insbesondere sichtbar gemacht, wurden. Mittels Laser kann beispielsweise eine Kennzeichnung in den kontaktflächenfreien Bereich 3 eines Chipmoduls 1 eingebracht werden, welche individualisierende Informationen repräsentiert. Insbesondere kann die Laserbehandlung bereits dann erfolgen, wenn die Chipmodule noch auf dem Modulband angeordnet sind und noch nicht ausgestanzt wurden.

Weitere Ausführungsbeispiele eines Chipmoduls 1 mit Kennzeichnung sind in den Fig. 10a und 10b dargestellt. Hier befinden sich im kontaktflächenfreien Bereich 3 eine oder mehrere Erhebungen 25a bzw. 25b, die von der Unterseite 7 des Trägers 6 aus hochgeprägt sind. Die Erhebungen 25a des Chipmoduls aus Fig. 10a erstrecken sich bis zum Rand des Chipmoduls 1, wohingegen die Erhebungen 25b des Chipmoduls 1 aus Fig. 10b nicht bis zum Rand reichen. Die Erhebungen 25b weisen darüber hinaus eine Farbschicht 26 auf, welche zum Beispiel mittels eines Farbtransferbandes übertragen werden kann. Die Erhebungen 25a können selbstverständlich auch eine Farbschicht aufweisen.

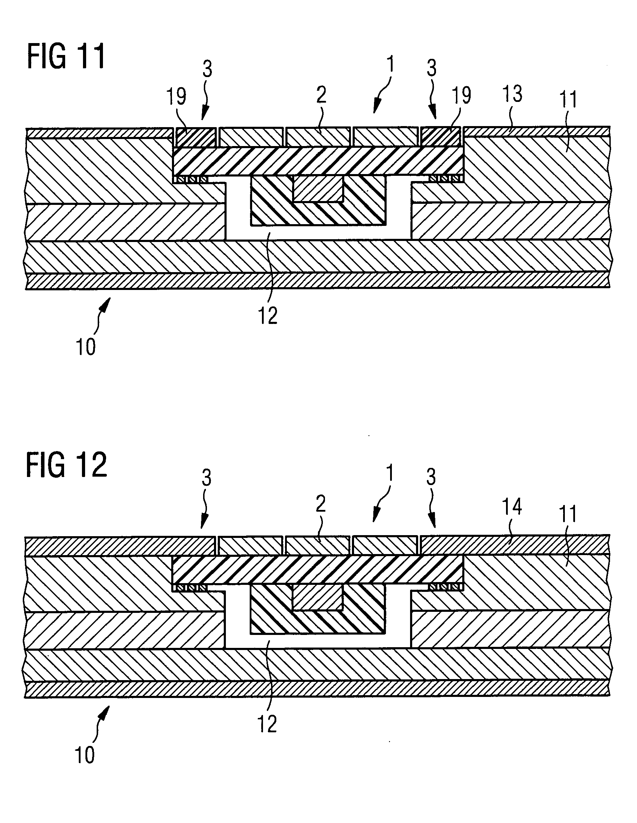

In Fig. 11 ist ein schematischer Ausschnitt eines tragbaren Datenträgers 10 im Schnitt dargestellt. In eine Kavität 12 des hier mehrschichtigen Datenträgerkörpers 11 ist ein Chipmodul 1 eingebracht. Das Chipmodul 1 ist gemäß einem der zuvor beschriebenen Ausführungsbeispiele ausgebildet, wobei die Beschichtung 19 im kontaktflächenfreien Bereich 3 hier die gleiche Dicke aufweist wie die Kontaktflächen 2. Dadurch sind die Oberfläche der Beschichtung 19, die Oberfläche der Kontaktflächen 2 und die Oberfläche 13 des Datenträgerkörpers 11 bündig zueinander. In dem kontaktflächenfreien Bereich 3 ist eine Kennzeichnung angeordnet, welche wie zuvor ausgeführt für sich alleine oder in Beziehung zu einer Kennzeichnung auf dem Datenträgerkörper 11 stehen kann.

Fig. 12 zeigt ein weiteres Ausführungsbeispiel eines tragbaren Datenträgers 10. Hier wird die Kennzeichnung auf dem kontaktflächenfreien Bereich 3 erst nach dem Implantieren des Chipmoduls 1 in die Kavität 12 des Datenträgerkörpers 11 aufgebracht. Es wird eine Deckschicht 14 aufgebracht, welche den kontaktflächenfreien Bereich 3 des Chipmoduls 1 überlappt. Die Dicke der Deckschicht 14 entspricht der Dicke der ISO-Kontakte 2, so dass der tragbare Datenträger 10 eine bündige Oberfläche 13 aufweist. Die Deckschicht 14 kann beispielsweise eine Kunststofffolie sein, welche auf den Datenträgerkörper 11 nach dem Implantieren des Chipmoduls 1 in die Kavität 12 laminiert wird. Die Deckschicht 14 kann aber auch durch ein Druckverfahren, beispielsweise im Thermotransferverfahren, gebildet werden, wobei der Datenträgerkörper 11 und der kontaktflächenfreie Bereich 3 zusammen bedruckt werden. Auch ein nachträgliches Bedrucken einer auflaminierten Kunststoffschicht ist möglich.

Fig. 13a - 13c zeigen schematisch Verfahrensschritte zur Herstellung eines Chipmoduls 1 gemäß Fig. 5, bei welchem der kontaktflächenfreie Bereich 3 mit einer Spritzgussmasse 17a überdeckt wird. Bevorzugt handelt es sich um die gleiche Masse, in der auch der integrierte Schaltkreis 5 eingebettet ist. In Fig. 13a ist ein Modulband 6a dargestellt, auf dem mehrere Chipmodule 1 angeordnet sind. Die jeweiligen Träger 6 der Chipmodule 1 sind Bestandteil des Modulbandes 6a und werden am Ende der Herstellung aus dem Modulband 6a herausgetrennt, beispielsweise ausgestanzt. Auf dem in Fig. 13a dargestellten Modulband 6a sind beispielhaft drei Chipmodule 1 gezeigt, welche bereits jeweils metallische Kontaktflächen 2, einen integrierten Schaltkreis 5 und eine mit dem integrierten Schaltkreis 5 verbundene Antenne 4 aufweisen. Die Kontaktflächen 2 sind beispielsweise über Bonddrähte mit dem integrierten Schaltkreis 5 verbunden, welche der Einfachheit halber in den Figuren nicht dargestellt sind. Der integrierte Schaltkreis (sowie eventuell vorhandene Bonddrähte) sind in diesem Stadium der Herstellung noch nicht von einer Vergussmasse geschützt.

Im nächsten, in Fig. 13b dargestellten Schritt des Verfahrens wird eine Spritzgussform um das Modulband 6a angebracht. Diese umfasst einen ersten Teil 27a, welcher auf der Oberseite 8 des Modulbands 6a angeordnet ist, und einen zweiten Teil 27b, welcher auf der Unterseite 7 des Modulbands 6a angeordnet ist. Der erste Teil 27a der Spritzgussform dient zur Überspritzung der kontaktflächenfreien Bereiche 3 der Chipmodule 1 und weist dazu entsprechende Kavitäten auf. Der zweite Teil 27b weist entsprechende Kavitäten zur Überspritzung der integrierten Schaltkreise 5 auf. Über Einspritzkanäle 28a, 28b wird nach dem Zusammenführen der beiden Teile 27a, 27b eine Spritzgussmasse 17,17a eingespritzt. Das Einspritzen erfolgt bevorzugt simultan und mit der gleichen Spritzgussmasse. In Fig. 13c ist das Produkt nach dem Spritzgussprozess dargestellt. Die integrierten Schaltkreise 5 sind von einer Vergussmasse 17 umgeben, und die kontaktflächenfreien Bereiche sind mit der Spritzgussmasse 17a überdeckt, wobei die Dicke der aufgespritzen Masse 17a derart gewählt ist, dass ihre Oberfläche mit der Oberfläche der Kontaktflächen 2 bündig ist. Abschließend werden die Chipmodule 1 aus dem Modulband 6a herausgetrennt. Die Spritzgussmasse 17a kann zusätzlich noch bedruckt werden.

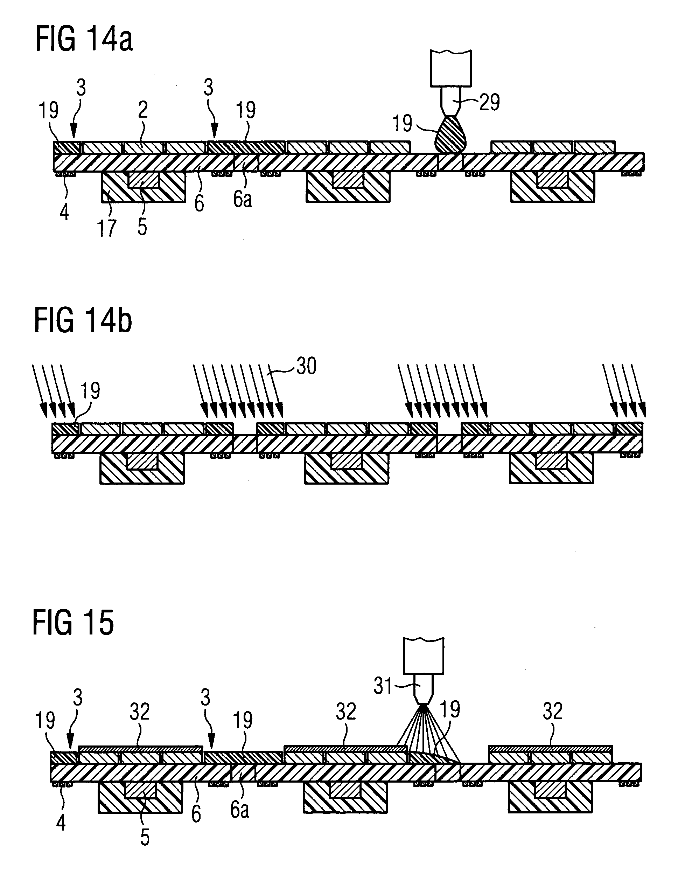

In Fig. 14a und 14b ist ein Verfahren zur Herstellung eines Chipmoduls 1 gemäß Fig. 6 schematisch dargestellt. Auf die kontaktflächenfreien Bereiche 3 des Modulbands 6a wird eine UV-härtende Masse 19 im flüssigen oder zähflüssigen Zustand mittels eines Dispensers 29 aufgetragen. Im Gegensatz zu dem in den Fig. 13a - 13c dargestellten Verfahren sind die Chips 5 bereits von einer Vergussmasse 17 umgeben. Nach dem Auftragen der Masse 19 wird sie mit ultraviolettem Licht 30 bestrahlt, so dass sie aushärtet. Auch bei diesem Verfahren wird die Masse 19 derart aufgetragen, dass die Beschichtung nach dem Aushärten die gleiche Dicke aufweist wie die Kontaktflächen 2. Statt der UV-härtenden Masse kann auch eine thermisch aushärtende Masse verwendet werden, wobei dann UV-Lichtquellen entsprechend durch Wärmequellen ersetzt werden.

In Fig. 15 ist ein weiteres Verfahren schematisch dargestellt, bei dem die Beschichtung 19 der kontaktflächenfreien Bereiche 3 durch Aufsprühen insbesondere einer Farbe oder eines Lacks erfolgt. Vor dem Beschichten werden die Kontaktflächen 2 mit einer Schutzschicht 32 bedeckt, um eine Verschmutzung der Kontaktflächen 2 zu vermeiden. Die Schutzschicht 32 wird nach dem Besprühen entfernt. Sie kann beispielsweise durch einen Schutzlack oder durch eine Abdeckmaske gebildet werden. Das Besprühen erfolgt mittels eines Sprühkopfes 31, der die Beschichtung 19 auf die kontaktflächenfreien Bereiche 3 des Modulbands 6a bzw. der Träger 6 aufbringt. Die Beschichtung erfolgt auch hier in einer der Dicke der Kontaktflächen 2 entsprechenden Dicke. Alternativ kann in diesem Verfahren, wie auch in den in den Fig. 13 und 14 dargestellten Verfahren, eine dünnere Beschichtung aufgebracht werden, welche anschließend beispielsweise überdruckt oder mit Schutzlack abgedeckt wird.

Fig. 16 zeigt den Vorgang des Implantierens eines Chipmoduls 1 in die Kavität 12 eines Datenträgerkörpers 11 mittels eines Heizstempels 33. Aufgrund der bündigen Oberfläche des Chipmoduls 1 und des damit verbundenen vollflächigen Kontakts des Heizstempels 33 mit dem Chipmodul 1 wird die Wärme des Heizstempels 33 effektiv zu dem Heißkleber 34 auf der Chipmodulrückseite geleitet. Darüber hinaus erfolgt auch eine vollflächige Kraftübertragung von dem Stempel 33 auf das Chipmodul 1. Der Heißkleber 34 wird durch die Wärme aktiviert und fixiert so das Chipmodul 1 in der Kavität 12.

## Patentansprüche

1. Chipmodul (1) für einen tragbaren Datenträger (10), umfassend
einen Träger (6) mit einer ersten Seite (7) und einer der ersten Seite (7) gegenüberliegenden zweiten Seite (8),
wobei auf der ersten Seite (7) ein integrierter Schaltkreis (5) sowie eine Antenne (4) für einen kontaktlosen Daten- und/oder Energietransfer zwischen einem externen Gerät und dem integrierten Schaltkreis (5) und auf der zweiten Seite (8) metallische Kontaktflächen (2) für einen kontaktbehafteten Daten- und/oder Energietransfer zwischen einem externen Gerät und dem integrierten Schaltkreis (5) angeordnet sind,
wobei Windungen der Antenne (4) auf der ersten Seite (7) um den integrierten Schaltkreis (5) herum geführt und in einem Bereich der ersten Seite (7) angeordnet sind, welcher vollständig oder zumindest überwiegend einem kontaktflächenfreien Bereich (3) der zweiten Seite (8) gegenüberliegt,
**dadurch gekennzeichnet, dass** in dem kontaktflächenfreien Bereich (3) eine Kennzeichnung (9) angeordnet ist, um eine Sicherheit bei einer Zuordnung des Chipmoduls (1) zu erhöhen,
wobei sich die Kennzeichnung (9) über den kontaktflächenfreien Bereich (3) erstreckt,
wobei die Kennzeichnung (9) Schriftzeichen, Symbole oder Logos umfasst,
wobei die Kennzeichnung (9) zumindest teilweise durch einen Aufdruck gebildet ist,
wobei die Kennzeichnung (9) zumindest teilweise durch eine Laserbeschriftung gebildet ist,
wobei der kontaktflächenfreie Bereich (3) eine Beschichtung aus einer Spritzgussmasse (17a) aufweist, in der auch der integrierte Schaltkreis (5) eingebettet ist,
wobei der kontaktflächenfreie Bereich (3) eine Beschichtung (19, 20) aus einer UV-härtenden Masse aufweist,
wobei der kontaktflächenfreie Bereich (3) eine auf den Träger (6) aufgeklebte Beschichtung (19, 20) aufweist,
wobei der kontaktflächenfreie Bereich (3) eine fotolithografische Beschichtung (19, 20) aufweist.

2. Chipmodul nach Anspruch 1, **dadurch gekennzeichnet, dass** die Beschichtung (19, 20) aus einem nichtmetallischen Material besteht.

3. Chipmodul nach Anspruch 1, **dadurch gekennzeichnet, dass** der kontaktflächenfreie Bereich (3) eine oder mehrere Erhebungen (25a, 25b) aufweist, die durch Hochprägung von der ersten Seite (7) aus gebildet sind.

4. Chipmodul nach einem der Ansprüche 1 bis 3, **dadurch gekennzeichnet, dass** Umrisse der Kennzeichnung (9) zumindest teilweise oder vollständig durch die Beschichtung (19, 20) bzw. die Erhebungen (25a, 25b) gebildet sind.

5. Chipmodul nach einem der Ansprüche 1 bis 4, **dadurch gekennzeichnet, dass** der kontaktflächenfreie Bereich (3) vollständig oder zumindest überwiegend mit der Beschichtung (19, 20) bzw. den Erhebungen (25a, 25b) versehen ist, wobei die Beschichtung (19, 20) bzw. die Erhebungen (25a, 25b) eine Dicke aufweist bzw. aufweisen, so dass eine freie Oberfläche der Beschichtung (19, 20) bzw. der Erhebungen (25a, 25b) mit einer Oberfläche der Kontaktflächen (2) bündig ist.

6. Chipmodul nach einem der Ansprüche 1 bis 5, **dadurch gekennzeichnet, dass** im kontaktflächenfreien Bereich (3) eine außen liegende Schutzschicht (21), insbesondere ein Schutzlack, aufgebracht ist.

7. Chipmodul nach einem der Ansprüche 1 bis 6, **dadurch gekennzeichnet, dass** der kontaktflächenfreie Bereich (3) ein Sicherheitsmerkmal, insbesondere ein optisch variables Sicherheitsmerkmal, aufweist.

8. Tragbarer Datenträger (10), umfassend einen Datenträgerkörper (11) mit einer darin angeordneten Kavität (12), wobei in der Kavität (12) ein Chipmodul (1) gemäß den Ansprüche 1 bis 7 angeordnet ist

9. Verfahren zur Herstellung eines Chipmoduls (1) gemäß den Ansprüchen 1 bis 7.

## Claims

1. A chip module (1) for a portable data carrier (10), comprising a carrier (6) having a first side (7) and a second side (8) disposed opposite the first side (7),
wherein on the first side (7) there are arranged an integrated circuit (5) and an antenna (4) for a contactless data and/or energy transfer between an external device and the integrated circuit (5), and on the second side (8) there are arranged metallic contact fields (2) for a contact-type data and/or energy transfer between an external device and the integrated circuit (5),
wherein windings of the antenna (4) on the first side (7) are guided around the integrated circuit (5) and are arranged in an area of the first side (7) which is disposed completely or at least predominantly opposite a contact-field-free area (3) of the second side (8),
**characterized in that** in the contact-field-free area (3) a marking (9) is arranged in order to increase a security upon an allocation of the chip module (1),
wherein the marking (9) extends over the contact-field-free area (3),
wherein the marking (9) comprises characters, symbols or logos,
wherein the marking (9) is formed at least partially by a print,
wherein the marking (9) is formed at least partially by a laser inscription,
wherein the contact-field-free area (3) has a coating of an injection-molding compound (17a) in which also the integrated circuit (5) is embedded,
wherein the contact-field-free area (3) has a coating (19, 20) of a UV-curing compound,
wherein the contact-field-free area (3) has a coating (19, 20) adhesively attached to the carrier (6),
wherein the contact-field-free area (3) has a photolithographic coating (19, 20).

2. The chip module according to claim 1, **characterized in that** the coating (19, 20) consists of a non-metallic material.

3. The chip module according to claim 1, **characterized in that** the contact-field-free area (3) has one or several elevations (25a, 25b) which are formed by high embossing from the first side (7).

4. The chip module according to any of the claims 1 to 3, **characterized in that** contours of the marking (9) are formed at least partially or completely by the coating (19, 20) and/or the elevations (25a, 25b).

5. The chip module according to any of the claims 1 to 4, **characterized in that** the contact-field-free area (3) is provided completely or at least predominantly with the coating (19, 20) and/or the elevations (25a, 25b), wherein the coating (19, 20) and/or the elevations (25a, 25b) has or have a thickness such that a free surface of the coating (19, 20) and/or of the elevations (25a, 25b) is flush with a surface of the contact fields (2).

6. The chip module according to any of the claims 1 to 5, **characterized in that** in the contact-field-free area (3) an exterior protective layer (21), in particular a protective lacquer, is applied.

7. The chip module according to any of the claims 1 to 6, **characterized in that** the contact-field-free area (3) has a security feature, in particular an optically variable security feature.

8. A portable data carrier (10), comprising a data carrier body (11) having a cavity (12) arranged therein, wherein in the cavity (12) there is arranged a chip module (1) according to the claims 1 to 7.

9. A method for manufacturing a chip module (1) according to the claims 1 to 7.

## Revendications

1. Module puce (1) destiné à un support de données (10) portable, comprenant
un support (6) ayant un premier flanc (7) et un deuxième flanc (8) faisant face au premier flanc (7),
cependant que, sur le premier flanc (7), un circuit intégré (5) ainsi qu'une antenne (4) destinée à un transfert de données et/ou d'énergie sans contact entre un appareil externe et le circuit intégré (5) et, sur le deuxième flanc (8), des surface de contact (2) métalliques destinées à un transfert de données et/ou d'énergie avec contact entre un appareil externe et le circuit intégré (5) sont agencés,
des spires de l'antenne (4) étant, sur le premier flanc (7), conduites autour du circuit intégré (5) et étant agencées dans une zone du premier flanc (7) qui fait face entièrement ou au moins principalement à une zone (3) exempte de surfaces de contact du deuxième flanc (8),
**caractérisé en ce que**, dans la zone (3) exempte de surfaces de contact, un marquage (9) est agencé afin d'accroître la sécurité lors d'une allocation du module puce (1),
le marquage (9) s'étendant sur la zone (3) exempte de surfaces de contact,
le marquage (9) comprenant des caractères, symboles ou logos,
le marquage (9) étant constitué au moins partiellement par une impression,
le marquage (9) étant constitué au moins partiellement par une inscription laser,
la zone (3) exempte de surfaces de contact comportant un revêtement en matière moulée par injection (17a) dans laquelle aussi le circuit intégré (5) est incorporé,
la zone (3) exempte de surfaces de contact comportant un revêtement (19, 20) en matière durcissant par UV,
la zone (3) exempte de surfaces de contact comportant un revêtement (19, 20) collé sur le support (6),
la zone (3) exempte de surfaces de contact comportant un revêtement (19, 20) photo lithographique.

2. Module puce selon la revendication 1, **caractérisé en ce que** le revêtement (19, 20) consiste en un matériau non métallique.

3. Module puce selon la revendication 1, **caractérisé en ce que** la zone (3) exempte de surfaces de contact comporte une ou plusieurs protubérances (25a, 25b) qui sont formées par gaufrage en relief à partir du premier flanc (7).

4. Module puce selon une des revendication de 1 à 3, **caractérisé en ce que** des contours du marquage (9) sont formés au moins partiellement ou entièrement par le revêtement (19, 20) ou les protubérances (25a, 25b).

5. Module puce selon une des revendication de 1 à 4, **caractérisé en ce que** la zone (3) exempte de surfaces de contact est pourvue entièrement ou au moins principalement du revêtement (19, 20) ou des protubérances (25a, 25b), le revêtement (19, 20) ou les protubérances (25a, 25b) présentant une épaisseur de telle manière qu'une surface libre du revêtement (19, 20) ou des protubérances (25a, 25b) est à fleur avec une surface des surfaces de contact (2).

6. Module puce selon une des revendication de 1 à 5, **caractérisé en ce que** dans la zone (3) exempte de surfaces de contact, une couche protectrice (21) se trouvant à l'extérieur, notamment un vernis de protection, est appliqué(e).

7. Module puce selon une des revendication de 1 à 6, **caractérisé en ce que** la zone (3) exempte de surfaces de contact comporte une caractéristique de sécurité, notamment une caractéristique de sécurité optiquement variable.

8. Support de données (10) portable comprenant un corps (11) de support de données avec une cavité (12) agencée dedans, un module puce (1) selon les revendication de 1 à 7 étant agencé dans la cavité (12).

9. Procédé de fabrication d'un module puce (1) selon les revendication de 1 à 7.
